# EUROPEAN PATENT SPECIFICATION

(11) **EP 3 898 829 B1**
(45) Date of publication and mention of the grant of the patent: **24.07.2024**
(21) Application number: 19836905.0
(22) Date of filing: 17.12.2019
(51) Int. Cl.: C08L 23/08, C08L 23/04, C08L 23/10

(54) **AQUEOUS IONOMERIC DISPERSIONS, AND METHODS THEREOF**
WÄSSRIGE IONOMERDISPERSIONEN UND VERFAHREN DAFÜR
DISPERSIONS AQUEUSES D'IONOMÈRES ET PROCÉDÉS ASSOCIÉS

(30) Priority: 20.12.2018 US 201862782413 P
(43) Date of publication of application: 27.10.2021
(73) Proprietor: Dow Global Technologies LLC, Midland, MI 48674 (US)
(72) Inventor: MOGLIA, Robert S., Midland, Michigan 48674 (US); SABA, Stacey A., Midland, Michigan 48674 (US); KATEPALLI, Hari, Midland, Michigan 48674 (US); CRIMMINS, Matthew J., Midland, Michigan 48674 (US); HUANG, Jessica Ye, Lake Jackson, Texas 77566 (US); DE GARAVILLA, James R., Orange, Texas 77630 (US); CHOU, Richard Tien Hua, Hockessin, Delaware 19707 (US); MORRIS, Barry Alan, Wilmington, Delaware 19880 (US)
(74) Representative: Boult Wade Tennant LLP
(86) International application number: PCT/US2019/066898
(87) International publication number: WO 2020/131902

(56) References cited:
- JP-A- 2000 273 659

## Description

### TECHNICAL FIELD

Embodiments described herein relate generally to aqueous dispersions of ionomers and to methods to form aqueous dispersions of ionomers. More particularly, embodiments of aqueous dispersions described herein may be used to coat a substrate.

### BACKGROUND

Ionomers may be made by reacting metal salts with poly(ethylene (meth)acrylic acid) copolymers (base resin). Ionomers neutralized with multivalent cations, such as divalent and trivalent cations, have not been found to be easy to disperse in water due to the multivalent cation's tendency to form polymeric crosslinks. On the other hand, ionomers neutralized with monovalent salts of potassium, sodium, or volatile bases, such as, ammonia have also been difficult to disperse in water due to their increased melt viscosity and hydrophobicity.
JP-A-2000/273659 relates to a rust preventive treating agent for a metallic surface, which is a water based dispersed body composed of an ionomer resin (A) neutralized by univalent metal and bivalent metal, an ionomer resin (B) neutralized by ammonia or amine, and water and which is blended in such a manner that, to the total quantity of carboxyl groups in the unneutralized state of the ionomer resins contained in (A) and (B), the content of the univalent metal is controlled to <=0.6 (chemical equivalent), and the content of the bivalent metal is controlled to 0.05 to 0.8 (chemical equivalent).

Accordingly, it is desirable to have alternative compositions that more readily form aqueous dispersions of ionomers.

### SUMMARY

Disclosed in embodiments herein are aqueous ionomer dispersions. The aqueous ionomer dispersions comprise an ionomer composition and water, wherein the ionomer composition comprises: a) at least 20 wt.%, based on the total weight percent of the ionomer composition, of an ionomer, wherein the ionomer is an ethylene acid copolymer that is at least partially neutralized, wherein the ethylene acid copolymer is the polymerized reaction product of: from 70 to 85 wt.% of ethylene; and from 15 to 30 wt.% of a monocarboxylic acid, based on the total weight of monomers present in the ethylene acid copolymer; wherein at least 50 mole % of total acid units of the ethylene acid copolymer are neutralized, with from 25 mole % to 60 mole % of total acid units of the ethylene acid copolymer being neutralized with a magnesium cation and at least 20 mole % of total acid units of the ethylene acid copolymer being neutralized with a monovalent cation; and b) 10 to 80 wt.%, based on the total weight percent of the ionomer composition, of a polyolefin.

Also disclosed in embodiments herein are methods of manufacturing an aqueous ionomer dispersion. The methods comprise providing an ionomer composition, wherein the ionomer composition comprises: a) at least 20 wt.%, based on the total weight percent of the ionomer composition, of an ionomer, wherein the ionomer is an ethylene acid copolymer that is at least partially neutralized, wherein the ethylene acid copolymer is the polymerized reaction product of: from 70 to 85 wt.% of ethylene; and from 15 to 30 wt.% of a monocarboxylic acid, based on the total weight of monomers present in the ethylene acid copolymer; wherein from 25 mole % to 60 mole % of total acid units of the ethylene acid copolymer are neutralized with a magnesium cation; and b) 10 to 80 wt.%, based on the total weight percent of the ionomer composition, of a polyolefin; and mixing the ionomer composition with an aqueous composition comprising water and a monovalent cation to form an aqueous ionomer dispersion, wherein the ionomer in the aqueous ionomer dispersion has at least 50 mole % of total acid units of the ethylene acid copolymer neutralized, and at least 20 mole % of total acid units of the ethylene acid copolymer are neutralized with a monovalent cation.

Further disclosed in embodiments herein are methods of forming a coated article. The methods comprise, coating the aqueous ionomer dispersion as described in one or more embodiments herein onto a substrate to form a coated substrate; and drying the coated substrate to form a coated article. A coated article as formed by the method described herein.

Even further disclosed in embodiments herein are coated articles. The coated articles may comprise a substrate and an ionomer composition coated onto the substrate.

In one or more embodiments herein, the aqueous ionomer dispersion comprises 10 to 60 wt.% of the ionomer composition. In one or more embodiments herein, the ethylene acid copolymer is the polymerized reaction product of from 75 to 85 wt.% of ethylene and from 15 to 25 wt.% of the monocarboxylic acid, based on the total weight of monomers present in the ethylene acid copolymer. In one or more embodiments herein, from 30 mole% to 60 mole% of total acid units of the ethylene acid copolymer are neutralized with a magnesium cation. The ionomer composition comprises 10 to 80 wt.% of the polyolefin. In one or more embodiments herein, the polyolefin is selected from the group consisting of polyethylene or polypropylene. In one or more embodiments herein, the polyolefin is an ethylene/alpha-olefin interpolymer having a melt index, I2, as determined according to ASTM D1238 (at 190 °C 2.16 kg), of 0.1 to 100.0 g/10 min.

In some embodiments herein, the ionomer composition is formed by: providing the ethylene acid copolymer and neutralizing from 25 mole % to 60 mole % of total acid units of the ethylene acid copolymer with the magnesium cation to form an ionomer; and combining the ionomer with the polyolefin to form the ionomer composition. In other embodiments herein, the ionomer composition is formed by: combining the ethylene acid copolymer with the polyolefin to form a blend; and adding the magnesium cation to the blend in an amount sufficient to neutralize from 25 mole % to 60 mole % of the total acid units of the ethylene acid copolymer to form the ionomer composition. In one or more embodiments herein, the mixing takes place at a temperature of from 100 Celsius to 300 Celsius.

Additional features and advantages of the embodiments will be set forth in the detailed description which follows, and in part will be readily apparent to those skilled in the art from that description or recognized by practicing the embodiments described herein, including the detailed description. It is to be understood that both the foregoing and the following description describes various embodiments and are intended to provide an overview or framework for understanding the nature and character of the claimed subject matter.

### DETAILED DESCRIPTION

Reference will now be made in detail to embodiments of aqueous ionomer dispersions and methods of manufacturing aqueous ionomer dispersions. The aqueous ionomer dispersion may be used to coat substrates, such as, flooring, plastic parts, wood, textiles, metal, ceramic, fibers, glass, or paper. It is noted however, that this is merely an illustrative implementation of the embodiments disclosed herein. The embodiments are applicable to other technologies that are susceptible to similar problems as those discussed above. For example, the aqueous ionomer dispersions described herein may be used in as additives in paints (or other coatings), concretes/cements, paper, plastics, composites, electrodes, adhesives and as an adhesive, or as a binder (asphalt, bitumen, paper, textiles, plastics).

In embodiments herein, the aqueous ionomer dispersion comprises 10 wt.% to 60 wt.% of the ionomer composition. All individual values and subranges of 10 wt.% to 60 wt.% are included and disclosed herein. For example, in some embodiments, the aqueous ionomer dispersion comprises 10 wt.% to 55 wt.%, 15 wt.% to 55 wt.%, 15 wt.% to 50 wt.%, or 15 wt.% to 45 wt.% of the ionomer composition. In embodiments herein, the aqueous ionomer dispersion may also comprise 40 wt.% to 90 wt.% of water. All individual values and subranges of 40 wt.% to 90 wt.% of water are included and disclosed herein. For example, in some embodiments, the aqueous ionomer dispersion comprises 45 wt.% to 90 wt.%, 45 wt.% to 85 wt.%, 50 wt.% to 85 wt.%, or 55 wt.% to 85 wt.% of water.

The aqueous ionomer dispersions described herein have particles dispersed in an aqueous solution. The particles present in the aqueous ionomer dispersion may have a mean particle size of less than or equal to 4 µm. All individual values and subranges are included and disclosed herein. For examples, the aqueous ionomer dispersion may have a mean particle size of less than or equal to 3.5 µm, less than or equal to 3.0 µm, from 0.1 to 4 µm, from 0.1 to 3.5 µm, or from 0.1 to 3.0 µm. The aqueous dispersion described herein may also have a total resin solids content of from 10 to 60 wt.%, from 15 to 60 wt.%, from 20 to 60 wt.%, from 25 to 60 wt.%, or from 30 to 60 wt.%.

### Ionomer Composition

The ionomer composition comprises an ionomer and a polyolefin. In embodiments herein, the ionomer composition comprises at least 20 wt.%, based on the total weight percent of the ionomer composition, of an ionomer and 10 to 80 wt.%, based on the total weight percent of the ionomer composition, of a polyolefin. All individual values and subranges are included and disclosed herein. For example, in some embodiments, the ionomer composition comprises from 20 wt.% to 90 wt.%, (alternatively, from 20 wt.% to 85 wt.%, from 20 wt.% to 80 wt.%, or from 20 wt.% to 60 wt.%) of the ionomer, and from 15 wt.% to 80 wt.%, from 20 wt.% to 80 wt.%, or from 40 wt.% to 80 wt.% of the polyolefin.

The ionomer composition, the ionomer, and/or the polyolefin may also contain other additives known in the art. Exemplary additives may include, but are not limited to, processing aids, flow enhancing additives, lubricants, pigments, dyes, flame retardants, impact modifiers, nucleating agents, anti-blocking agents such as silica, thermal stabilizers, UV absorbers, UV stabilizers, surfactants, chelating agents, and coupling agents. Additives can be used in amounts ranging from about 0.01 wt.% to about 10 wt.%, based on the weight of the materials in the ionomer composition, ionomer, or polyolefin.

### Ionomer

The ionomer is an ethylene acid copolymer that is at least partially neutralized. The ethylene acid copolymer is the polymerized reaction product of from 70 to 85 wt.% of ethylene; and from 15 to 30 wt.% of a monocarboxylic acid, based on the total weight of monomers present in the ethylene acid copolymer. All individual values and subranges are included and disclosed herein. For example, in some embodiments, the ethylene acid copolymer is the polymerized reaction product of from 72 to 85 wt.% of ethylene; and from 15 to 28 wt.% of a monocarboxylic acid, based on the total weight of monomers present in the ethylene acid copolymer. In other embodiments, the ethylene acid copolymer is the polymerized reaction product of from 75 to 85 wt.% of ethylene; and from 15 to 25 wt.% of a monocarboxylic acid, based on the total weight of monomers present in the ethylene acid copolymer. The ethylene acid copolymer may be polymerized according to processes disclosed in U.S. Pat. Nos. 3,404,134; 5,028,674; 6,500,888; and 6,518,365. In some embodiments, blends of two or more ethylene acid copolymers may be used, provided that the aggregate components and properties of the blend fall within the limits described above for the ethylene acid copolymers. For example, two ethylene methacrylic acid copolymers may be used such that the total weight % of methacrylic acid is from 15 wt.% to 30 wt.% of the total polymeric material.

In referring to the total acid units neutralized, the calculation of percent neutralization is based on the number of acid units considered to be present, based on the known amount of moles of the monocarboxylic acid comonomer, and the number of metal equivalents added. In embodiments herein, at least 50 mole % of total acid units of the ethylene acid copolymer are neutralized to form the ionomer, with from 25 mole % to 60 mole % of total acid units of the ethylene acid copolymer are neutralized with a magnesium cation, and at least 20 mole % total acid units of the ethylene acid copolymer are neutralized with a monovalent cation. All individual values and subranges are included and disclosed herein. For example, in some embodiments, at least 50 mole % (alternatively, at least 60 mole%, at least 70 mole %, at least 75 mole %, or at least 80 mole %) of total acid units of the ethylene acid copolymer are neutralized to form the ionomer, with from 25 mole % to 60 mole % (alternatively, 30 mole % to 60 mole %, 35 mole % to 60 mole %, or 25 mole % to 55 mole%) of total acid units of the ethylene acid copolymer are neutralized with a magnesium cation, and at least 20 mole % (alternatively, at least 25 mole %, at least 30 mole %, at least 35 mole %, at least 40 mole %, at least 50 mole %, from 25 mole % to 75 mole %, from 30 mole % to 75 mole %, from 35 mole % to 75 mole %, or from 40 mole % to 75 mole %) of total acid units of the ethylene acid copolymer are neutralized with a monovalent cation. The ethylene acid copolymer may be neutralized using methods disclosed in, for example, U.S. Pat. No. 3,404,134. In other embodiments, at least 60 mole % (alternatively, at least 70 mole %, or at least 75 mole %) of total acid units of the ethylene acid copolymer are neutralized to form the ionomer, with from 25 mole % to 60 mole % (alternatively, 30 mole % to 60 mole % or 35 mole % to 60 mole %) of total acid units of the ethylene acid copolymer are neutralized with a magnesium cation, and at least 20 mole % (alternatively, at least 25 mole %, at least 30 mole %, from 25 mole % to 75 mole %, or from 30 mole % to 75 mole %) of total acid units of the ethylene acid copolymer are neutralized with a monovalent cation.

Exemplary monovalent cations may include, but are not limited to, sodium, potassium, lithium, amines (such as, dimethyl ethanol amine (DMEA), triethyl amine, ammonia, etc.), or combinations thereof. In some embodiments herein, the monovalent cation is selected from the group consisting of sodium, potassium, lithium, ammonia, or combinations thereof. In one or more embodiments herein, the monovalent cation is sodium, potassium, ammonia, or combinations thereof.

In some embodiments herein, the ionomer may have a melt index (12) from 1 to 100 g/10 min. All individual values and subranges are included and disclosed herein. For example, in some embodiments, the ionomer may have a melt index (12) from 1 to 75 g/10 min or 1 to 50 g/10 min. I2 is measured according to ASTM D1238 at 190°C, 2.16 kg.

### Polyolefin

As noted above, ionomer compositions described in embodiments herein comprises a polyolefin. The polyolefin may be selected from the group consisting of polyethylene or polypropylene. In some embodiments, the polyolefin is a polyethylene. The polyethylene is the reaction product of ethylene and, optionally, one or more alpha-olefin comonomers. In other embodiments, the polyolefin is an ethylene/alpha-olefin interpolymer. As used herein, the term "ethylene/alpha-olefin interpolymer" refers to the reaction product of ethylene and one or more alpha-olefin comonomers.

The ethylene/alpha-olefin interpolymer comprises (a) greater than or equal to 55%, for example, greater than or equal to 60%, greater than or equal to 65%, greater than or equal to 70%, greater than or equal to 75%, greater than or equal to 80%, greater than or equal to 85%, greater than or equal to 90%, greater than or equal to 92%, greater than or equal to 95%, greater than or equal to 97%, greater than or equal to 98%, greater than or equal to 99%, greater than or equal to 99.5%, from greater than 50% to 99%, from greater than 50% to 97%, from greater than 50% to 94%, from greater than 50% to 90%, from 70% to 99.5%, from 70% to 99%, from 70% to 97% from 70% to 94%, from 80% to 99.5%, from 80% to 99%, from 80% to 97%, from 80% to 94%, from 80% to 90%, from 85% to 99.5%, from 85% to 99%, from 85% to 97%, from 88% to 99.9%, 88% to 99.7%, from 88% to 99.5%, from 88% to 99%, from 88% to 98%, from 88% to 97%, from 88% to 95%, from 88% to 94%, from 90% to 99.9%, from 90% to 99.5% from 90% to 99%, from 90% to 97%, from 90% to 95%, from 93% to 99.9%, from 93% to 99.5% from 93% to 99%, or from 93% to 97%, by weight, of the units derived from ethylene; and (b) less than 30 percent, for example, less than 25 percent, or less than 20 percent, less than 18%, less than 15%, less than 12%, less than 10%, less than 8%, less than 5%, less than 4%, less than 3%, less than 2%, less than 1%, from 0.1 to 20 %, from 0.1 to 15 %, 0.1 to 12%, 0.1 to 10%, 0.1 to 8%, 0.1 to 5%, 0.1 to 3%, 0.1 to 2%, 0.5 to 12%, 0.5 to 10%, 0.5 to 8%, 0.5 to 5%, 0.5 to 3%, 0.5 to 2.5%, 1 to 10%, 1 to 8%, 1 to 5%, 1 to 3%, 2 to 10%, 2 to 8%, 2 to 5%, 3.5 to 12%, 3.5 to 10%, 3.5 to 8%, 3.5% to 7%, or 4 to 12%, 4 to 10%, 4 to 8%, or 4 to 7%, by weight, of units derived from one or more alpha-olefin comonomers. The comonomer content may be measured using any suitable technique, such as techniques based on nuclear magnetic resonance ("NMR") spectroscopy, and, for example, by 13C NMR analysis as described in U.S. Patent 7,498,282.

Suitable alpha-olefin comonomers typically have no more than 20 carbon atoms. The one or more alpha-olefins may be selected from the group consisting of C3-C20 acetylenically unsaturated monomers and C4-C18 diolefins. For example, in some embodiments, the alpha-olefin comonomers may have 3 to 10 carbon atoms or 3 to 8 carbon atoms. Exemplary alpha-olefin comonomers include, but are not limited to, propylene, 1-butene, 1-pentene, 1-hexene, 1-heptene, 1-octene, 1-nonene, 1-decene, and 4-methyl-1-pentene. The one or more alpha-olefin comonomers may, for example, be selected from the group consisting of propylene, 1-butene, 1-hexene, and 1-octene; or in the alternative, from the group consisting of 1-butene, 1-hexene and 1-octene.

In some embodiments described herein, the ethylene/alpha-olefin interpolymer may have a density of 0.850 g/cc to 0.910 g/cc. All individual values and subranges of at least 0.850 g/cc to 0.910 g/cc are included and disclosed herein. For example, in some embodiments, the ethylene/alpha-olefin interpolymer may have a density of 0.855 to 0.905 g/cc, 0.855 to 0.900 g/cc, 0.855 to 0.900 g/cc, or 0.865 to 0.895 g/cc. Density may be measured in accordance with ASTM D792.

In addition to the density, the ethylene/alpha-olefin interpolymer may have a melt index, I2, of 0.1 g/10 min to 100.0 g/10 min. All individual values and subranges of 0.1 g/10 min to 100.0 g/10 min are included and disclosed herein. For example, in some embodiments, the ethylene/alpha-olefin interpolymer may have a melt index, I2, ranging from a lower limit of 0.1, 0.5, 1.0, 1.5, 2.5, or 5.0 to an upper limit of 100.0, 75.0, 50.0, 35.0, 25.0, or 20.0 g/10 min. In other embodiments, the ethylene/alpha-olefin interpolymer may have a melt index, I2, of 0.5 g/10 min to 100.0 g/10 min, 1.0 g/10 min to 100.0 g/10 min, 2.0 g/10 min to 100.0 g/10 min, 5.0 g/10 min to 100.0 g/10 min, 1.0 g/10 min to 75.0 g/10 min, 5.0 g/10 min to 75.0 g/10 min, 1.0 g/10 min to 50.0 g/10 min,, or 5.0 g/10 min to 50.0 g/10 min. Melt index, I2, may be measured in accordance with ASTM D1238 (190°C. and 2.16 kg).

### Methods

Also provided herein are methods to manufacture an aqueous ionomer dispersion. The methods comprise providing an ionomer composition; and mixing the ionomer composition with an aqueous composition comprising water and a monovalent cation to form an aqueous ionomer dispersion. Mixing of the ionomer composition with the aqueous composition may take place at a temperature of from 100 °C. to 300 °C. The result may be a heated aqueous ionomer dispersion. A further, optional, step may include cooling the heated aqueous ionomer dispersion to a temperature of from 20 to 30 °C., wherein the ionomer remains dispersed in the liquid phase. As used herein, "disperse," "dispersing" and related terms refer to solid articles, such as, pellets of polymer, are mixed with water and over a brief period of time disappear into the liquid phase.

Aspects of the amount of ionomer composition and water in the aqueous ionomer dispersion is previously described in embodiments herein. The ionomer composition comprises an ionomer and a polyolefin. The polyolefin is previously described in embodiments herein. The amounts of ionomer and polyolefin in the ionomer composition are also previously described in embodiments herein. The ionomer is an ethylene acid copolymer that is at least partially neutralized. The ethylene acid copolymer and neutralization of the ethylene acid copolymer are previously described in embodiments herein..

As previously noted, the ionomer composition is mixed with an aqueous composition comprising water and a monovalent cation to form an aqueous ionomer dispersion. In embodiments herein, the aqueous composition may comprise monovalent cation in an amount sufficient to neutralize the total acid units of the ethylene acid copolymer by monovalent cation.

In some embodiments herein, the ionomer composition is formed by providing the ethylene acid copolymer and neutralizing from 25 mole % to 60 mole % of total acid units of the ethylene acid copolymer with the magnesium cation to form an ionomer; and combining the ionomer with the polyolefin to form the ionomer composition.

In some embodiments herein, the ionomer composition is formed by: combining the ethylene acid copolymer with the polyolefin to form a blend; and adding the magnesium cation to the blend in an amount sufficient to neutralize from 25 mole % to 60 mole % of the total acid units of the ethylene acid copolymer to form the ionomer composition.

### Uses

The aqueous dispersions described herein may be used to coat a substrate. Suitable substrates may include paperboard, cardboard, pulp-molded shape, woven fabric, nonwoven fabric, film, open-cell foam, closed-cell foam, or metallic foil. In some embodiments herein, a method for coating a substrate comprises: providing an aqueous ionomer dispersion as described in embodiments herein, applying the aqueous ionomer dispersion to the substrate to form a coated substrate. Applying may be performed by a dipping method, a spray method, a roll coating method, a doctor blade method, a flow coating method, or other suitable methods for applying liquid coatings that are known in the art. The method may further comprise a drying step.

In other embodiments herein, a method of forming a coated article comprises coating the aqueous ionomer dispersion as described in one or more embodiments herein onto a substrate to form a coated substrate; and drying the coated substrate to form a coated article.

The coated article comprises an ionomer composition layer as described herein formed on at least one surface of a substrate. The ionomer composition layer comprises an ionomer composition. The ionomer composition comprises a) at least 20 wt.%, based on the total weight percent of the ionomer composition, of an ionomer as described in embodiments herein, and b) up to 80 wt.%, based on the total weight percent of the ionomer composition, of a polyolefin as described in embodiments herein.

In embodiments herein, the coated article may exhibit improved static charge as compared to an uncoated article.

### TEST METHODS

### Density

Density can be measured in accordance with ASTM D-792 and reported in grams per cubic centimeter (g/cc).

### Melt Index/Melt Flow Rate

For ethylene-based polymers, the melt index (I₂) is measured in accordance with ASTM D-1238, Procedure B (condition 190°C/2.16 kg) and reported in grams eluted per 10 minutes (g/10 min). For propylene-based polymers, the melt flow rate (MFR) is measured in accordance with ASTM D-1238, Procedure B (condition 230°C/2.16 kg) and reported in grams eluted per 10 minutes (g/10 min).

### Mean Particle Size

Mean particle size is defined as the volume average particle diameter as measured with a Beckman Coulter LS 13-320 Laser Light Scattering Particle Sizer (Beckman Coulter Inc., Fullerton, California) implementing an epoxy particle model (real fluid refractive index = 1.332, real sample refractive index = 1.5, imaginary sample refractive index = 0). The samples are diluted into an aqueous KOH solution with pH >10 before measuring.

### Dynamic Viscosity

Dynamic viscosity is measured via a Brookfield CAP 2000+ parallel plate viscometer equipped with Spindle 10. Approximately 0.5 mL of dispersion is loaded into the device and is measured at an appropriate rpm to obtain a steady viscosity value for 15 seconds before recording the dynamic viscosity.

### EXAMPLES

Polyolefin dispersions as outlined in Table 3 are prepared utilizing a Berstorff (KraussMaffei) extruder (25 mm screw diameter, 48 LID rotating at 450 rpm) according to the following procedure and conditions outlined in Table 4: the base polyolefin resin and ionomer surfactant, as described below in Tables 1 and 2, are supplied to the feed throat of the extruder via a Schenck Mechatron loss-in-weight feeder and a K-Tron pellet feeder, respectively. The polyolefin resin and ionomer surfactant are melt blended and then emulsified in the presence of an initial aqueous stream to form an emulsion phase. The initial aqueous stream comprises water plus a monovalent cation solution. The monovalent cation solution is a solution of 50 wt.% of sodium hydroxide. The emulsion phase is then conveyed forward to the dilution and cooling zone of the extruder where additional dilution water is added to form the aqueous dispersions having a solids level as outlined in Table 3. The barrel temperature of the extruder is set to 150 °C, with the exception of the first two barrel segments which were set to 25 and 90 °C respectively. After the dispersion exited the extruder, it is further cooled and then filtered via a 200 µm mesh size bag filter.

Materials that did not form dispersions at the temperature indicated are denoted as "No" and those that did form dispersions at the temperature indicated are denoted as "Yes" in Table 5 below. An "aqueous dispersion" is formed when (i) greater than 95% of the solids were converted into fine particles with diameters less than or equal to 4 µm; and (ii) the dispersion is stable such that a cloudy or milky liquid with virtually no visible solids at manufacturing temperature, did not exhibit any visual change after the initial cooling to room temperature.

The ionomer surfactants are summarized below in Table 1, and are prepared from an ethylene acid copolymer that is the polymerized reaction product of ethylene and methacrylic acid (MAA). The amounts of the MAA are shown in Table 1 below. Additional aspects of the ionomer are provided below.

**Table 1- Ionomer Surfactants**

| | % MAA | Magnesium Cation Source | % Neutralization | Ionomer MI (12) (g/10 min) |
|---|---|---|---|---|
| Ionomer 1 | 20.0 | Magnesium dihydroxide | 54.0 | 29.0 |
| Ionomer 2 | 19.0 | Magnesium dihydroxide | 41.0 | 15.0 |

**Table 2 - Polyolefin Characteristics**

| | Polymer | Description | Density (g/cc) | Melt Index (I2) or Melt Flow Rate (MFR) (g/10 min) |
|---|---|---|---|---|
| Poly 1 | **ENGAGE^{™} 8200,** available from The Dow Chemical Company (Midland, MI) | a polyethylene that is an ethylene/alpha-olefin interpolymer. | 0.870 | 5.0 |

**Table 3 - Aqueous Ionomer Dispersions**

| Example | Ionomer | Polyolefin | % Ionomer | % Polyolefin | Monovalent Cation | Monovalent Cation % Neutralization | Total % Neutralization |
|---|---|---|---|---|---|---|---|
| 1 | Ionomer 1 | Poly 1 | 40 | 60 | Sodium | 23% | 77% |
| 2 | Ionomer 1 | Poly 1 | 40 | 60 | Sodium | 45% | 98% |
| 3 | Ionomer 2 | Poly 1 | 40 | 60 | Sodium | 59% | 100% |

**Table 4 - Dispersion Process Feed Rates**

| | Polymer (g/min) | Ionomer (g/min) | Base (g/min) | Initial Aqueous (g/min) | Dilution (g/min) |
|---|---|---|---|---|---|
| 1 | 45 | 30 | 0.8 | 20.0 | 95 |
| 2 | 45 | 30 | 1.6 | 20.0 | 95 |
| 3 | 45 | 30 | 2.1 | 21.0 | 95 |

**Table 5 - Aqueous Ionomer Dispersion Results**

| Example | Dispersion Yes (Y)/No (N) | % Solids | Mean Particle Size (µm) | pH | Dynamic Viscosity (cP) |
|---|---|---|---|---|---|
| 1 | Y | 22.4 | 2.27 | 10.3 | 221 |
| 2 | Y | 43.3 | 0.69 | 11.0 | 255 |
| 3 | Y | 41.5 | 0.53 | 10.9 | 161 |

As shown by the dispersion results in Table 5, inventive examples 2 and 3 formed dispersions at solids content of greater than 30% solids, and inventive example 1 formed a dispersion at a solids content of greater than 20% solids. The inventive dispersions had greater than 95% of the solids were converted into fine particles with diameters less than or equal to 4 µm. Also, the dispersions were stable such that a cloudy or milky liquid with virtually no visible solids at manufacturing temperature, did not exhibit any visual change after the initial cooling to room temperature.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An aqueous ionomer dispersion comprising an ionomer composition and water,
wherein the ionomer composition comprises:
a) at least 20 wt.%, based on the total weight percent of the ionomer composition, of an ionomer, wherein the ionomer is an ethylene acid copolymer that is at least partially neutralized, wherein the ethylene acid copolymer is the polymerized reaction product of:
from 70 to 85 wt.% of ethylene; and
from 15 to 30 wt.% of monocarboxylic acid, based on the total weight of monomers present in the ethylene acid copolymer; and
wherein at least 50 mole % of total acid units of the ethylene acid copolymer are neutralized to form the ionomer, with from 25 mole % to 60 mole % of total acid units of the ethylene acid copolymer are neutralized with a magnesium cation, and at least 20 mole % of total acid units of the ethylene acid copolymer are neutralized with a monovalent cation;
b) 10 to 80 wt.%, based on the total weight percent of the ionomer composition, of a polyolefin.

2. The aqueous ionomer dispersion of claim 1, wherein the aqueous ionomer dispersion comprises 10 to 60 wt.% of the ionomer composition.

3. The aqueous ionomer dispersion of claims 1 or 2, wherein the ethylene acid copolymer is the polymerized reaction product of from 75 to 85 wt.% of ethylene and from 15 to 25 wt.% of the monocarboxylic acid, based on the total weight of monomers present in the ethylene acid copolymer.

4. The aqueous ionomer dispersion of claims 1-3, wherein from 30 mole% to 60 mole% of total acid units of the ethylene acid copolymer are neutralized with a magnesium cation.

5. The aqueous ionomer dispersion of claims 1-4, wherein the polyolefin is selected from the group consisting of polyethylene or polypropylene.

6. The aqueous ionomer dispersion of claims 1-4, wherein the polyolefin is an ethylene/alpha-olefin interpolymer having a melt index, 12, as determined according to ASTM D1238 (at 190 °C 2.16 kg), of 0.1 to 100.0 g/10 min.

7. A method for manufacturing an aqueous ionomer dispersion, the method comprising:
providing an ionomer composition, wherein the ionomer composition comprises:
a) at least 20 wt.%, based on the total weight percent of the ionomer composition, of an ionomer, wherein the ionomer is an ethylene acid copolymer that is at least partially neutralized, wherein the ethylene acid copolymer is the polymerized reaction product of:
from 70 to 85 wt.% of ethylene; and
from 15 to 30 wt.% of a monocarboxylic acid, based on the total weight of monomers present in the ethylene acid copolymer;
wherein from 25 mole % to 60 mole % of total acid units are neutralized with a magnesium cation; and
b) 10 to 80 wt.%, based on the total weight percent of the ionomer composition, of a polyolefin; and
mixing the ionomer composition with an aqueous composition comprising water and a monovalent cation to form an aqueous ionomer dispersion, wherein the ionomer in the aqueous ionomer dispersion has at least 50 mole % of total acid units neutralized and at least 20 mole % of total acid units are neutralized with the monovalent cation.

8. The method of claim 7, wherein the ionomer composition is formed by:
providing the ethylene acid copolymer and neutralizing from 25 mole % to 60 mole % of total acid units of the ethylene acid copolymer with the magnesium cation to form an ionomer; and
combining the ionomer with the polyolefin to form the ionomer composition.

9. The method of claim 7, wherein the ionomer composition is formed by:
combining the ethylene acid copolymer with the polyolefin to form a blend; and
adding the magnesium cation to the blend in an amount sufficient to neutralize from 25 mole % to 60 mole % of total acid units of the ethylene acid copolymer to form the ionomer composition.

10. The method of claims 7-9, wherein mixing takes place at a temperature of from 100 Celsius to 300 Celsius.

11. A method of forming a coated article, the method comprising:
coating the aqueous ionomer dispersion of any one of claims 1-6 onto a substrate to form a coated substrate; and
drying the coated substrate to form a coated article.

12. A coated article formed according to the method of claim 11.

## Patentansprüche

1. Wässrige lonomerdispersion, umfassend eine lonomerzusammensetzung und Wasser,
wobei die lonomerzusammensetzung umfasst:
a) mindestens zu 20 Gew.-%, bezogen auf den Gesamtgewichtsprozentsatz der lonomerzusammensetzung, ein lonomer, wobei das lonomer ein Ethylensäure-Copolymer ist, das mindestens teilweise neutralisiert ist, wobei das Ethylensäure-Copolymer das polymerisierte Reaktionsprodukt ist von:
zu 70 bis 85 Gew.-% Ethylen; und
zu 15 bis 30 Gew.-% Monocarbonsäure, bezogen auf den Gesamtgewichtsprozentsatz der in dem Ethylensäure-Copolymer vorhandenen Monomere; und
wobei mindestens 50 Mol-% der Gesamtsäureeinheiten des Ethylensäure-Copolymers neutralisiert sind, um das lonomer zu bilden, wobei von 25 Mol-% bis 60 Mol-% der Gesamtsäureeinheiten des Ethylensäure-Copolymers mit einem Magnesiumkation neutralisiert werden, und mindestens 20 Mol-% der Gesamtsäureeinheiten des Ethylensäure-Copolymers mit einem einwertigen Kation neutralisiert werden,
b) zu 10 bis 80 Gew.-%, bezogen auf den Gesamtgewichtsprozentsatz der lonomerzusammensetzung, ein Polyolefin.

2. Wässrige lonomerdispersion nach Anspruch 1, wobei die wässrige lonomerdispersion zu 10 bis 60 Gew.-% die lonomerzusammensetzung umfasst.

3. Wässrige lonomerdispersion nach den Ansprüchen 1 oder 2, wobei das Ethylensäure-Copolymer das polymerisierte Reaktionsprodukt von 75 bis 85 Gew.-% Ethylen und von 15 bis 25 Gew.-% der Monocarbonsäure, bezogen auf das Gesamtgewicht der in dem Ethylensäure-Copolymer vorhandenen Monomere, ist.

4. Wässrige lonomerdispersion nach den Ansprüchen 1 bis 3, wobei von 30 Mol-% bis 60 Mol-% der Gesamtsäureeinheiten des Ethylensäure-Copolymers mit einem Magnesiumkation neutralisiert sind.

5. Wässrige lonomerdispersion nach den Ansprüchen 1 bis 4, wobei das Polyolefin aus der Gruppe bestehend aus Polyethylen oder Polypropylen ausgewählt ist.

6. Wässrige lonomerdispersion nach den Ansprüchen 1 bis 4, wobei das Polyolefin ein Ethylen/Alpha-Olefin-Interpolymer ist, das einen Schmelzindex, I2, gemäß ASTM D1238 (bei 190 °C 2,16 kg) bestimmt, von 0,1 bis 100,0 g/10 min aufweist.

7. Verfahren zum Herstellen einer wässrigen lonomerdispersion, das Verfahren umfassend:
Bereitstellen einer lonomerzusammensetzung, wobei die lonomerzusammensetzung umfasst:
a) mindestens zu 20 Gew.-%, bezogen auf den Gesamtgewichtsprozentsatz der lonomerzusammensetzung, ein lonomer, wobei das lonomer ein Ethylensäure-Copolymer ist, das mindestens teilweise neutralisiert ist, wobei das Ethylensäure-Copolymer das polymerisierte Reaktionsprodukt ist von:
zu 70 bis 85 Gew.-% Ethylen; und
zu 15 bis 30 Gew.-% einer Monocarbonsäure, bezogen auf den Gesamtgewichtsprozentsatz der in dem Ethylensäure-Copolymer vorhandenen Monomere;
wobei von 25 Mol-% bis 60 Mol-% der Gesamtsäureeinheiten mit einem Magnesiumkation neutralisiert sind, und
b) zu 10 bis 80 Gew.-%, bezogen auf den Gesamtgewichtsprozentsatz der lonomerzusammensetzung, ein Polyolefin; und
Mischen der lonomerzusammensetzung mit einer wässrigen Zusammensetzung, umfassend Wasser und ein einwertiges Kation, um eine wässrige lonomerdispersion zu bilden, wobei das lonomer in der wässrigen lonomerdispersion mindestens 50 Mol-% der Gesamtsäureeinheiten in neutralisierter Form aufweist, und mindestens 20 Mol-% der Gesamtsäureeinheiten mit einem einwertigen Kation neutralisiert sind.

8. Verfahren nach Anspruch 7, wobei die lonomerzusammensetzung gebildet wird durch:
Bereitstellen des Ethylensäure-Copolymers und Neutralisieren von 25 Mol-% bis 60 Mol-% der Gesamtsäureeinheiten des Ethylensäure-Copolymers mit dem Magnesiumkation, um ein lonomer zu bilden; und
Kombinieren des lonomers mit dem Polyolefin, um die lonomerzusammensetzung zu bilden.

9. Verfahren nach Anspruch 7, wobei die lonomerzusammensetzung gebildet wird durch:
Kombinieren des Ethylensäure-Copolymers mit dem Polyolefin, um eine Mischung zu bilden; und
Hinzufügen des Magnesiumkations zu der Mischung in einer Menge, die ausreicht, um von 25 Mol-% bis 60 Mol-% der Gesamtsäureeinheiten des Ethylensäure-Copolymers zu neutralisieren, um die lonomerzusammensetzung zu bilden.

10. Verfahren nach den Ansprüchen 7 bis 9, wobei das Mischen bei einer Temperatur von 100 Celsius bis 300 Celsius erfolgt.

11. Verfahren zum Bilden eines beschichteten Artikels, das Verfahren umfassend:
Beschichten der wässrigen lonomerdispersion nach einem der Ansprüche 1 bis 6 auf ein Substrat, um ein beschichtetes Substrat zu bilden; und
Trocknen des beschichteten Substrats, um einen beschichteten Artikel zu bilden.

12. Beschichteter Artikel, gebildet gemäß dem Verfahren nach Anspruch 11.

## Revendications

1. Dispersion aqueuse d'ionomère comprenant une composition d'ionomère et de l'eau,
dans laquelle la composition d'ionomère comprend :
a) au moins 20 % en poids, sur la base du pourcentage en poids total de la composition d'ionomère, d'un ionomère, dans laquelle l'ionomère est un copolymère d'éthylène-acide qui est au moins partiellement neutralisé, dans laquelle le copolymère d'éthylène-acide est le produit de réaction polymérisé de :
de 70 à 85 % en poids d'éthylène ; et
de 15 à 30 % en poids d'acide monocarboxylique, sur la base du poids total de monomères présents dans le copolymère d'éthylène-acide ; et
dans laquelle au moins 50 % molaires des motifs acides totaux du copolymère d'éthylène-acide sont neutralisés pour former l'ionomère, de 25 % molaires à 60 % molaires des motifs acides totaux du copolymère d'éthylène-acide étant neutralisés avec un cation magnésium, et au moins 20 % molaires des motifs acides totaux du copolymère d'éthylène-acide étant neutralisés avec un cation monovalent ;
b) 10 à 80 % en poids, sur la base du pourcentage en poids total de la composition d'ionomère, d'une polyoléfine.

2. Dispersion aqueuse d'ionomère selon la revendication 1, dans laquelle la dispersion aqueuse d'ionomère comprend 10 à 60 % en poids de la composition d'ionomère.

3. Dispersion aqueuse d'ionomère selon les revendications 1 ou 2, dans laquelle le copolymère d'éthylène-acide est le produit de réaction polymérisé de 75 à 85 % en poids d'éthylène et de 15 à 25 % en poids de l'acide monocarboxylique, sur la base du poids total des monomères présents dans le copolymère d'éthylène-acide.

4. Dispersion aqueuse d'ionomère selon les revendications 1 à 3, dans laquelle de 30 % molaires à 60 % molaires des motifs acides totaux du copolymère d'éthylène-acide sont neutralisés avec un cation magnésium.

5. Dispersion aqueuse d'ionomère selon les revendications 1 à 4, dans laquelle la polyoléfine est choisie dans le groupe constitué de polyéthylène ou polypropylène.

6. Dispersion aqueuse d'ionomère selon les revendications 1 à 4, dans laquelle la polyoléfine est un interpolymère d'éthylène/alpha-oléfine ayant un indice de fusion, I2, tel que déterminé selon la norme ASTM D1238 (à 190 °C 2,16 kg), de 0,1 à 100,0 g/10 min.

7. Procédé de fabrication d'une dispersion aqueuse d'ionomère, le procédé comprenant :
la fourniture d'une composition d'ionomère, dans lequel la composition d'ionomère comprend :
a) au moins 20 % en poids, sur la base du pourcentage en poids total de la composition d'ionomère, d'un ionomère, dans lequel l'ionomère est un copolymère d'éthylène-acide qui est au moins partiellement neutralisé, dans lequel le copolymère d'éthylène-acide est le produit de réaction polymérisé de :
de 70 à 85 % en poids d'éthylène ; et
de 15 à 30 % en poids d'un acide monocarboxylique, sur la base du poids total des monomères présents dans le copolymère d'éthylène-acide ;
dans lequel de 25 % molaires à 60 % molaires des motifs acides totaux sont neutralisés avec un cation magnésium ; et
b) 10 à 80 % en poids, sur la base du pourcentage en poids total de la composition d'ionomère, d'une polyoléfine ; et
le mélange de la composition d'ionomère avec une composition aqueuse comprenant de l'eau et un cation monovalent pour former une dispersion aqueuse d'ionomère, dans lequel l'ionomère dans la dispersion aqueuse d'ionomère a au moins 50 % molaires des motifs acides totaux neutralisés et au moins 20 % molaires des motifs acides totaux sont neutralisés avec le cation monovalent.

8. Procédé selon la revendication 7, dans lequel la composition d'ionomère est formée par :
la fourniture du copolymère d'éthylène-acide et la neutralisation de 25 % molaires à 60 % molaires des motifs acides totaux du copolymère d'éthylène-acide avec le cation magnésium pour former un ionomère ; et
la combinaison de l'ionomère avec la polyoléfine pour former la composition d'ionomère.

9. Procédé selon la revendication 7, dans lequel la composition d'ionomère est formée par :
la combinaison du copolymère d'éthylène-acide avec la polyoléfine pour former un mélange ; et
l'ajout du cation magnésium au mélange en une quantité suffisante pour neutraliser de 25 % molaires à 60 % molaires des motifs acides totaux du copolymère d'éthylène-acide pour former la composition d'ionomère.

10. Procédé selon les revendications 7 à 9, dans lequel le mélange se déroule à une température allant de 100 Celsius à 300 Celsius.

11. Procédé de formation d'un article revêtu, le procédé comprenant :
le revêtement de la dispersion aqueuse d'ionomère selon l'une quelconque des revendications 1 à 6 sur un substrat pour former un substrat revêtu ; et
le séchage du substrat revêtu pour former un article revêtu.

12. Article revêtu formé selon le procédé selon la revendication 11.
